# EUROPEAN PATENT APPLICATION

(11) **EP 4 447 390 A1**
(43) Date of publication of application: **16.10.2024**
(21) Application number: 22919363.6
(22) Date of filing: 11.01.2022
(51) Int. Cl.: H04L 12/54

(54) **PACKET LOSS PROCESSING METHOD AND APPARATUS, SWITCH, SENDING DEVICE AND DATA TRANSMISSION SYSTEM**

(71) Applicant: Huawei Technologies Co., Ltd., Shenzhen, Guangdong 518129 (CN)
(72) Inventor: LI, Ying, Shenzhen, Guangdong 518129 (CN); LAN, Kejia, Shenzhen, Guangdong 518129 (CN); XIONG, Liudong, Shenzhen, Guangdong 518129 (CN); CHENG, Chuanning, Shenzhen, Guangdong 518129 (CN)
(74) Representative: Pfenning, Meinig & Partner mbB
(86) International application number: PCT/CN2022/071413
(87) International publication number: WO 2023/133697

(57) **Abstract**

This application discloses a packet loss handling method and apparatus, a switch, a sending device, and a data transmission system. A switch receives a data packet sent by a sending device, if the data packet cannot be forwarded to a receiving device, the switch discards the data packet, generates a packet loss response packet, and sends the packet loss response packet to the sending device to actively notify the sending device that a packet loss occurs in the data packet. In this case, the sending device does not need to wait for specified duration before determining that the packet loss occurs in the data packet. Therefore, detection duration of the sending device for the packet loss can be reduced. This helps the sending device make response and handle the packet loss in time and reduce network congestion and breakdown caused by delayed packet loss handling. Further, the switch sends the packet loss response packet to the sending device, and actively notifies the sending device that the packet loss occurs in the data packet, so that the sending device does not need to start a timer for each data packet, thereby reducing resource overheads.

## Description

### TECHNICAL FIELD

This application relates to the field of communication technologies, and in particular, to a packet loss handling method and apparatus, a switch, a sending device, and a data transmission system.

### BACKGROUND

In large-scale networking scenarios such as a data center and a cloud network computing cluster, a plurality of devices can perform data packet transmission through switches. During data packet transmission, a packet loss may occur due to link damage or short-time packet accumulation.

Usually, a sending device may perform packet loss detection by determining whether timeout occurs. The sending device starts timing after sending a data packet, and may end timing after receiving a response packet for the data packet; and if no response packet for the data packet is received after timing for specified duration, the sending device may determine that a packet loss occurs in the data packet.

In the foregoing method, because the sending device determines, after the specified duration, that the packet loss occurs, the packet loss detection is time-consuming, and may affect data transmission efficiency in a service execution process, resulting in greatly increased service execution time, or network congestion or even breakdown. In addition, the sending device correspondingly starts a timer each time sending a data packet, and this causes large resource overheads.

### SUMMARY

This application provides a packet loss handling method and apparatus, a switch, a sending device, and a data transmission system, to reduce detection duration of a sending device for a packet loss, and help improve data transmission efficiency.

According to a first aspect, an embodiment of this application provides a packet loss handling method, applied in a switch. The switch is configured to: receive a packet sent by a sending device, and forward the packet to a receiving device. The packet loss handling method includes: The switch receives a data packet sent by a sending device, and when the data packet cannot be forwarded to the receiving device, the switch discards the data packet, generates a packet loss response packet, and sends the packet loss response packet to the sending device.

Compared with the conventional technology in which the sending device starts a timer each time the sending device sends a data packet and performs packet loss detection based on whether timeout occurs in the timer, or the sending device performs packet loss detection based on an order of sending data packets and an order of receiving reply response packets of the data packets, in this embodiment of this application, when discarding the data packet, the switch actively generates the packet loss response packet and sends the packet loss response packet to the sending device to notify the sending device that a packet loss occurs in the data packet, and the sending device does not need to wait for specified duration before determining that the packet loss occurs in the data packet. This can reduce detection duration of the sending device for the packet loss, improve data transmission efficiency in a service execution process, and improve a service execution rate. In addition, this helps the sending device make response and handle the packet loss in time and reduce network congestion and breakdown caused by delayed packet loss handling. Further, the switch sends the packet loss response packet to the sending device, and actively notifies the sending device that the packet loss occurs in the data packet, so that the sending device does not need to start a timer for each data packet, thereby reducing resource overheads.

For example, in a process in which the switch forwards the data packet, if any one of the following packet loss conditions is satisfied, the data packet cannot be forwarded to the receiving device. The packet loss condition includes: Verification on the data packet fails, a buffer unit configured to store the data packet has no remaining storage space, route matching for the data packet fails, a communication link between the switch and the receiving device is damaged, or the switch fails to send the data packet within specified duration.

Optionally, when generating the packet loss response packet, the switch determines packet loss information of the data packet, and adds the determined packet loss information to the packet loss response packet, where the packet loss information indicates a reason for discarding the data packet. For example, the switch may determine the packet loss information of the data packet based on a packet loss condition corresponding to the data packet, add the packet loss information to the packet loss response packet, and feed back the packet loss response packet to the sending device, so that the sending device can determine a packet loss handling policy for the data packet based on the packet loss information of the data packet. For example, corresponding to the packet loss condition, the packet loss information may be any one of a packet loss due to a verification error, a packet loss due to buffer overflow, a packet loss due to a matching failure, a packet loss due to link damage, or a packet loss due to timeout. The sending device determines the packet loss handling policy in a targeted manner based on the packet loss information of the data packet instead of performing handling only by resending the data packet for all packet losses, so that the packet loss of the data packet can be processed effectively, and a transmission success rate of the data packet can be improved.

In a possible implementation, the switch may generate one packet loss response packet for one data packet, where the packet loss response packet includes only packet identification information of one discarded data packet and packet loss information of the data packet. In another possible implementation, to reduce signaling overheads, the switch may generate one packet loss response packet for a plurality of data packets, where the packet loss response packet includes packet identification information of a plurality of discarded data packets and packet loss information of each data packet.

In a possible implementation, the packet loss response packet may include packet identification information of a plurality of data packets and packet loss information corresponding to at least some of the plurality of data packets. For example, the switch may feed back each received data packet. For example, it is assumed that the sending device sends five data packets to the switch, the switch discards two of the data packets, and successfully sends the other three data packets to the receiving device. In this case, the packet loss response packet may include packet identification information of the four data packets, where the two data packets have corresponding packet loss information, and the other three data packets have no packet loss information. For the three data packets that are successfully sent, the packet loss response packet may include sending success identifiers of the three data packets.

According to a second aspect, an embodiment of this application provides a packet loss handling method. The method includes: A sending device sends a data packet to a switch, where the switch is configured to forward the packet to a receiving device; and if a packet loss response packet sent by the switch is received, the sending device determines a packet loss handling policy based on the packet loss response packet.

The packet loss response packet carries packet loss information of the data packet. The sending device may determine, based on the packet loss information, a packet loss condition corresponding to the data packet, and determine the packet loss handling policy for the data packet based on the packet loss condition corresponding to the data packet.

For example, if the packet loss information is a packet loss due to a verification error, it indicates that verification on the data packet fails, and a corresponding packet loss handling policy is determined as: resending the data packet; if the packet loss information is a packet loss due to buffer overflow, it indicates that a buffer unit configured to store the data packet has no remaining storage space, and a corresponding packet loss handling policy is determined as: reducing a speed of sending the packet to the switch, and resending the data packet; if the packet loss information is a packet loss due to a matching failure, it indicates that route matching for the data packet fails, and a corresponding packet loss handling policy is determined as: stopping sending the packet to the switch, modifying a route forwarding policy of the packet, and resending the data packet according to a modified route forwarding policy; if the packet loss information is a packet loss due to link damage, it indicates that a communication link between the switch and the receiving device is damaged, and a corresponding packet loss handling policy is determined as: stopping sending the packet to the switch, modifying a route forwarding policy of the packet, and resending the data packet according to a modified route forwarding policy; or if the packet loss information is a packet loss due to timeout, it indicates that the data packet is not sent to the receiving device within specified duration, and a corresponding packet loss handling policy is determined as: reducing a speed of sending the packet to the switch, and resending the data packet.

Optionally, in addition to the packet loss information, the packet loss response packet may further include packet identification information of the data packet, for example, information such as an identification code of the sending device corresponding to the data packet, an identification code of the receiving device, and a packet sequence number of the data packet.

In a possible implementation, the packet loss response packet includes only packet identification information of one discarded data packet and packet loss information of the data packet, and the sending device may determine a packet loss handling policy for the data packet according to the foregoing method. In another possible implementation, the packet loss response packet includes packet identification information of a plurality of discarded data packets and packet loss information of each data packet, and the sending device may separately determine a packet loss handling policy for each data packet based on packet identification information and the packet loss information of each data packet.

In a possible implementation, the packet loss response packet may include packet identification information of a plurality of data packets and packet loss information corresponding to at least some of the plurality of data packets. The sending device may separately determine a packet loss handling policy for each data packet based on packet identification information and packet loss information of each data packet in the at least some data packets, and do not perform packet loss handling for the successfully sent data packet.

According to a third aspect, an embodiment of this application provides a packet loss handling apparatus, used in a switch, where the switch is configured to forward a packet to a receiving device, and the apparatus includes:
a data receiving unit, configured to receive the data packet sent by a sending device;
a packet generation unit, configured to: when the data packet cannot be forwarded to the receiving device, discard the data packet, and generate a packet loss response packet; and
a packet sending unit, configured to send the packet loss response packet to the sending device.

In a possible implementation, the packet generation unit is further configured to: when any one of the following packet loss conditions is satisfied, determine that the data packet cannot be forwarded to the receiving device: Verification on the data packet fails, a buffer unit configured to store the data packet has no remaining storage space, route matching for the data packet fails, a communication link between the switch and the receiving device is damaged, or the data packet is not sent within specified duration.

In a possible implementation, the packet loss response packet includes packet loss information determined based on a packet loss condition corresponding to the data packet, so that the sending device determines a packet loss handling policy for the data packet based on the packet loss information, the packet loss information is any one of the following: a packet loss due to a verification error, a packet loss due to buffer overflow, a packet loss due to a matching failure, a packet loss due to link damage, or a packet loss due to timeout, and the packet loss response packet carries the packet loss information.

In another possible implementation, the packet loss response packet includes packet identification information of a plurality of data packets and packet loss information of each of the plurality of data packets.

In another possible implementation, the packet loss response packet includes packet identification information of a plurality of data packets and packet loss information corresponding to at least some of the plurality of data packets.

According to a fourth aspect, an embodiment of this application provides a packet loss handling apparatus, used in a sending device, where the apparatus includes:
a data sending unit, configured to send a data packet to a switch, where the switch is configured to forward the packet to a receiving device; and
a packet loss processing unit, configured to: if a packet loss response packet sent by the switch is received, determine a packet loss handling policy based on the packet loss response packet.

In a possible implementation, the packet loss response packet carries packet loss information of the data packet, and the packet loss processing unit is specifically configured to:
determine the packet loss handling policy for the data packet based on the packet loss information of the data packet, and the packet loss information is any one of the following: a packet loss due to a verification error, a packet loss due to buffer overflow, a packet loss due to a matching failure, a packet loss due to link damage, or a packet loss due to timeout.

In a possible implementation, the packet loss processing unit is specifically configured to:
if the packet loss information is the packet loss due to verification error, determine the packet loss handling policy as: resending the data packet;
if the packet loss information is the packet loss due to buffer overflow or the packet loss due to timeout, determine the packet loss handling policy as: reducing a speed of sending the packet to the switch, and resending the data packet; or
if the packet loss information is the packet loss due to matching failure or the packet loss due to link damage, determine the packet loss handling policy as: stopping sending the packet to the switch, modifying a route forwarding policy of the packet, and resending the data packet according to a modified route forwarding policy.

In a possible implementation, the packet loss response packet includes packet identification information of a plurality of data packets and packet loss information of each data packet, and the packet loss processing unit is specifically configured to: separately determine a packet loss handling policy for each data packet based on packet identification information and the packet loss information of each data packet.

In a possible implementation, the packet loss response packet may include packet identification information of a plurality of data packets and packet loss information corresponding to at least some of the plurality of data packets, and the packet loss processing unit is specifically configured to: separately determine a packet loss handling policy for each data packet based on packet identification information and packet loss information of each data packet in the at least some data packets.

According to a fifth aspect, an embodiment of this application further provides a switch, including a transceiver and a processor, where the transceiver is configured to send or receive a data packet under control of the processor, and the processor is configured to execute a computer program to implement any method according to the first aspect.

According to a sixth aspect, an embodiment of this application further provides a sending device, including a memory and a processor, where the memory stores a computer program that can be run on the processor, and when the computer program is executed by the processor, the processor is enabled to implement any method according to the second aspect.

According to a seventh aspect, an embodiment of this application further provides a data transmission system, including a sending device, a switch, and a receiving device, where the switch is configured to forward, by the sending device, a packet to the receiving device, the switch is the switch according to fifth aspect, and the sending device is the sending device according to the sixth aspect.

According to an eighth aspect, an embodiment of this application provides a computer-readable storage medium. The computer-readable storage medium stores computer-executable instructions, and the computer-executable instructions are used to enable a computer to perform any method according to the first aspect.

According to a ninth aspect, an embodiment of this application provides a computer-readable storage medium. The computer-readable storage medium stores computer-executable instructions, and the computer-executable instructions are used to enable a computer to perform any method according to the second aspect.

According to a tenth aspect, an embodiment of this application provides a computer program product, including computer-executable instructions, and the computer-executable instructions are used to enable a computer to perform any method according to the first aspect.

According to an eleventh aspect, an embodiment of this application provides a computer program product, including computer-executable instructions, and the computer-executable instructions are used to enable a computer to perform any method according to the second aspect.

For technical effect that can be achieved in any one of the second aspect to the eleventh aspect, refer to descriptions of beneficial effect in the first aspect. Details are not described herein again.

### BRIEF DESCRIPTION OF DRAWINGS

FIG. 1 is a diagram of an application scenario according to an embodiment of this application;
FIG. 2 is a diagram of interaction between devices in a data transmission process according to an embodiment of this application;
FIG. 3 is a diagram of a packet loss detection process according to the conventional technology;
FIG. 4 is a diagram of another packet loss detection process according to the conventional technology;
FIG. 5 is a diagram of a packet loss detection process according to an embodiment of this application;
FIG. 6 is a flowchart of a packet loss handling method according to an embodiment of this application;
FIG. 7 is a flowchart of another packet loss handling method according to an embodiment of this application;
FIG. 8 is a block diagram of a structure of a packet loss handling apparatus according to an embodiment of this application;
FIG. 9 is a block diagram of a structure of another packet loss handling apparatus according to an embodiment of this application;
FIG. 10 is a diagram of a structure of a switch according to an embodiment of this application;
FIG. 11 is a diagram of a structure of a sending device according to an embodiment of this application; and
FIG. 12 is a diagram of a structure of a data transmission system according to an embodiment of this application.

### DESCRIPTION OF EMBODIMENTS

To make objectives, technical solutions, and advantages of embodiments of this application clearer, the following describes embodiments of this application in detail with reference to accompanying drawings. Terms used in implementations of this application are merely used to explain specific embodiments of this application, but are not intended to limit this application. It is clear that the described embodiments are merely some rather than all of embodiments of this application. All other embodiments obtained by a person of ordinary skill in the art based on embodiments of this application without creative efforts shall fall within the protection scope of this application.

Before specific solutions provided in embodiments of this application are described, some terms in this application are explained and described, to facilitate understanding of a person skilled in the art. The terms in this application are not limited.

(1) Order-preserving network: Devices in the network perform data transmission based on an order-preserving network protocol, that is, data packets are transmitted in the network in order. A sending device sends the data packets to a switch in an order of sequence numbers, and the switch sends the data packets to a receiving device in the order of sequence numbers. The receiving device receives the data packets in the order, and returns response packets of the data packets to the sending device in the order of sequence numbers.

(2) Out-of-order network: Data packets can be transmitted out of order in a network. For example, a sending device may send the data packets to a switch in order or out of order, the switch may send the data packets to a receiving device out of order, and the receiving device may return response packets of the data packets to the sending device out of order.

In embodiments of this application, "a plurality of" means two or more. In view of this, in embodiments of this application, "a plurality of" may also be understood as "at least two". "At least one" may be understood as one or more, for example, one, two, or more. For example, "include at least one" means "include one, two, or more", and there is no limitation on which are included. For example, "include at least one of A, B, and C" may mean "include A, B, or C", "include A and B, A and C, or B and C", or "include A, B, and C". A term "and/or" describes an association relationship between associated objects and indicates that three relationships may exist. For example, A and/or B may indicate the following three cases: Only A exists, both A and B exist, and only B exists. In addition, a character "/" usually indicates an "or" relationship between the associated objects unless otherwise specified.

Unless otherwise specified, ordinal numbers such as "first" and "second" in embodiments of this application are used to distinguish between a plurality of objects, and are not intended to limit an order, a time sequence, a priority, or importance of the plurality of objects.

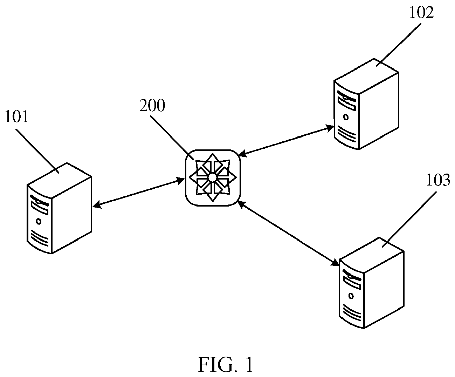

A typical application scenario of embodiments of this application is shown in FIG. 1. A first device 101, a second device 102, and a third device 103 may be devices in a computer system such as a data center, a cloud network computing cluster, or a computing cluster oriented to a high performance computing (high performance computing, HPC) service. The computer system can be used to improve a computing speed and reliability of a single computer.

The first device 101, the second device 102, and the third device 103 may be referred to as a service node or a compute node in the computer system, and may be configured to process service data, have a transceiver function, and may send data to another node in the computer system and/or receive data sent by the another node. The computer system may include a plurality of service nodes or compute nodes. For example, the computing cluster may include thousands to hundreds of thousands of service nodes or compute nodes. FIG. 1 shows examples of only three of the service nodes or compute nodes. The service node or compute node may be a server, a cloud server, a terminal device, a computer device, or the like. Alternatively, the service node or compute node may be a component, for example, a network interface controller (network interface controller, NIC), in the device. This is not limited in embodiments of this application.

The first device 101, the second device 102, and the third device 103 are connected via a switch (switch) 200. A system including the first device 101, the second device 102, the third device 103, and the switch 200 may also be referred to as a data transmission system. The switch 200 may be referred to as a transmission node, an intermediate node, or a switching node in the computer system. The switch 200 is a device with a data forwarding function. The first device 101 may access the second device 102 and the third device 103 via the switch 200.

Because the computer system includes many devices, a packet loss may occur in such a large-scale networking scenario due to device damage, link damage, or short-time packet accumulation. If packet loss detection and packet loss handling are not performed in time, service execution efficiency may be affected and service execution time may be greatly increased. If the packet loss detection and the packet loss handling are not performed in time, network congestion or even breakdown may be caused. For example, it is assumed that the first device 101 accesses the second device 102 and the third device 103 at the same time, and a packet loss occurs when a data packet is transmitted between the first device 101 and the second device 102. Access of the first device 101 to the third device 103 may be affected if the packet loss is not processed in time, to result in the network congestion or even breakdown, and greatly affect performance of the entire computer system.

To quickly perform the packet loss detection, so as to process the packet loss situation in time, and reduce impact of the packet loss on the computer system, embodiments of this application provide a packet loss handling method. In embodiments of this application, a switch receives a data packet sent by a sending device, and if it is determined that the data packet cannot be forwarded to a receiving device, the switch discards the data packet, and returns a packet loss response packet of the data packet to the sending device to actively notify the sending device that a packet loss occurs in the data packet. In this case, the sending device does not need to wait for specified duration before determining that the packet loss occurs in the data packet. Therefore, detection duration of the sending device for the packet loss can be reduced, data transmission efficiency in a service execution process can be improved, impact of the packet loss on a computer system can be reduced, and a service execution rate can be improved. In addition, this helps the sending device make response and handle the packet loss in time and reduce network congestion and breakdown caused by delayed packet loss handling.

To describe the packet loss handling method provided in embodiments of this application more clearly, the following uses an interaction process between the sending device, the switch, and the receiving device as an example to describe embodiments of this application in detail.

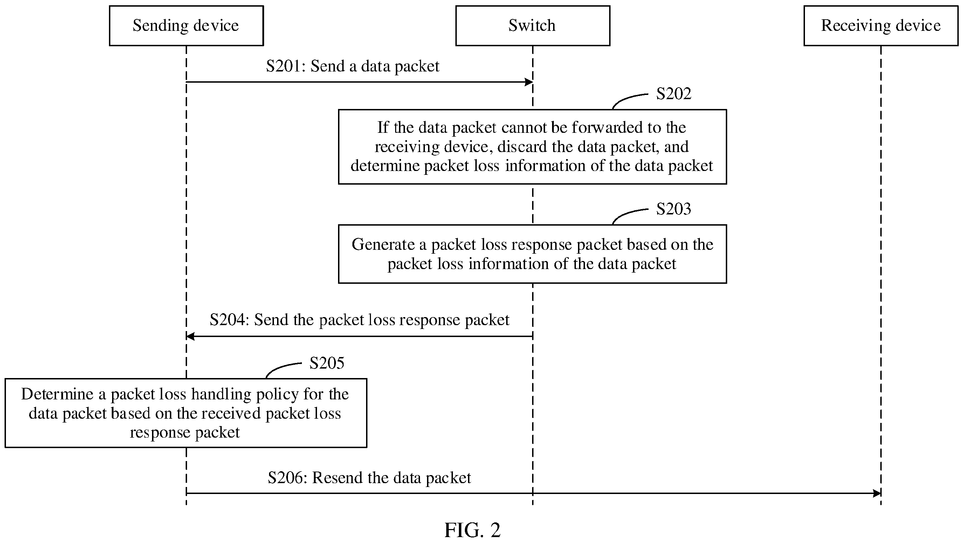

FIG. 2 is a flowchart of interaction between a sending device, a switch, and a receiving device in a data transmission process. For example, the sending device may be any service node or compute node in the computer system, or the receiving device may be any service node or compute node in the computer system, that is, when sending a data packet, any service node or compute node may serve as the sending device. When receiving a data packet, any service node or compute node may serve as the receiving device. For example, it is assumed that the first device 101 in FIG. 1 sends a data packet to the second device 102. In this case, the first device 101 may be referred to as the sending device, and the second device 102 may be referred to as the receiving device.

As shown in FIG. 2, the data transmission process between the sending device, the switch, and the receiving device may include the following steps.

S201: The sending device sends a data packet to the switch.

The sending device sends the data packet to the receiving device via the switch. The data packet may carry an identification code of the sending device, an identification code of the receiving device, and the like.

S202: When the data packet cannot be forwarded to the receiving device, the switch discards the data packet, and determines packet loss information of the data packet.

The switch may forward the data packet to the receiving device based on an identifier of the receiving device carried in the data packet. In a process of forwarding the data packet to the receiving device, if any one of the following packet loss conditions is satisfied, the switch cannot forward the data packet to the receiving device: Verification on the data packet fails, a buffer (buffer) unit configured to store the data packet has no remaining storage space, route matching for the data packet fails, a communication link between the switch and the receiving device is damaged, or the data packet is not sent within specified duration.

If it is determined that the data packet cannot be forwarded to the receiving device, the switch may discard the data packet, and determine the packet loss information of the data packet based on a packet loss condition corresponding to the data packet.

For example, the switch receives the data packet sent by the sending device, and performs verification on the data packet. If the verification fails, it is determined that the data packet cannot be forwarded to the receiving device. The switch discards the data packet, and determines that a packet loss condition corresponding to the data packet is that the verification on the data packet fails. It is determined, based on the packet loss condition corresponding to the data packet, that the packet loss information of the data packet is a packet loss due to a verification error.

If the verification succeeds, the data packet is stored in the buffer unit. The buffer unit is located in the switch, and may be understood as a packet queue. The switch may sequentially send packets stored in the packet queue to receiving devices respectively corresponding to the packets. If the buffer unit has no remaining storage space, that is, the buffer unit overflows and cannot store the data packet, the switch discards the data packet, and determines that a packet loss condition corresponding to the data packet is that the buffer unit configured to store the data packet has no remaining storage space. It is determined, based on the packet loss condition corresponding to the data packet, that the packet loss information of the data packet is a packet loss due to buffer overflow.

If the data packet is successfully stored in the buffer unit, the identifier of the receiving device carried in the data packet is obtained when the data packet is forwarded. The identifier of the receiving device may be understood as a destination address. The switch searches a routing table for a destination address that matches the destination address. If no destination address is matched, it is determined that the data packet cannot be forwarded to the receiving device. The switch discards the data packet, and determines that a packet loss condition corresponding to the data packet is that route matching for the data packet fails. It is determined, based on the packet loss condition corresponding to the data packet, that the packet loss information of the data packet is a packet loss due to a matching failure.

If the destination address is successfully matched in the routing table for the destination address of the data packet, whether a communication link between the switch and the receiving device corresponding to the destination address is normal is detected. If it is detected that the communication link between the switch and the receiving device is damaged, it is determined that the data packet cannot be forwarded to the receiving device. The switch discards the data packet, and determines that a packet loss condition corresponding to the data packet is that the communication link between the switch and the receiving device is damaged. It is determined, based on the packet loss condition corresponding to the data packet, that the packet loss information of the data packet is a packet loss due to link damage.

If it is detected that the communication link between the switch and the receiving device is normal, the data packet is sent to the receiving device through a data output port.

When the data packet is stored in the buffer unit, a timer of specified duration may be started. If the data packet is still not sent to the receiving device when the timer exceeds the specified duration, that is, the data packet is still stored in the buffer unit, the switch may determine that the data packet cannot be forwarded to the receiving device, discard the data packet, and determine that a packet loss condition corresponding to the data packet is that the data packet is not sent to the receiving device within the specified duration. It is determined, based on the packet loss condition corresponding to the data packet, that the packet loss information of the data packet is a packet loss due to timeout.

S203: The switch generates a packet loss response packet based on the packet loss information of the data packet.

Optionally, the packet loss response packet may include packet identification information of the data packet, for example, information such as the identification code of the sending device corresponding to the data packet, the identification code of the receiving device, and a packet sequence number of the data packet. The identification code of the sending device may be a network adapter of the sending device, namely, identifier (identifier, ID) information of the sending network adapter, or may be referred to as send engine identifier (send engine identifier, SEID) information. The identification code of the receiving device may be a network adapter of the receiving device, namely, an ID of the receiving network adapter, or may be referred to as receive engine identifier (receive engine identifier, REID) information.

For example, a packet format of the packet loss response packet may be as follows:

| | | | | |
|---|---|---|---|---|
| SEID | DEID | PSN | RSP | RSP Status |

The SEID indicates the identification code of the sending device, the DEID indicates the identification code of the receiving device, the PSN indicates the packet sequence number of the data packet, the RSP indicates that a packet command type is specified as a response packet, that is, the packet is a response packet, and the RSP Status is response status code, and indicates the packet loss information of the data packet. The SEID, the DEID, the PSN, the RSP, and the RSP Status are located in different fields in the packet loss response packet.

In some embodiments, when the packet is normally forwarded (that is, the data packet is sent to the receiving device) or the packet is lost, the switch may return the response packet to the sending device. Content of a field corresponding to the RSP Status in the response packet may be any one of the following:
3'b000: indicates that execution ends normally;
3'b001: indicates that the packet loss information of the data packet is the packet loss due to buffer overflow, that is, the data packet is discarded because the buffer unit overflows;
3'b010: indicates that the packet loss information of the data packet is the packet loss due to link damage, that is, the data packet is discarded because the communication link between the switch and the receiving device is damaged;
3'b011: indicates that the packet loss information of the data packet is the packet loss due to verification error, that is, the data packet is discarded because the verification on the data packet fails;
3'b100: indicates that the packet loss information of the data packet is the packet loss due to matching failure, that is, the data packet is discarded because the route matching fails; and
3'b101: indicates that the packet loss information of the data packet is the packet loss due to timeout, that is, the data packet is discarded because the switch does not send the data packet within the specified duration.

In some other embodiments, when forwarding the packet normally, the switch may not return the response packet to the sending device, and returns the packet loss response packet to the sending device only when the packet is lost. In this case, the content of the field corresponding to the RSP Status may not include 3'b000.

S204: The switch returns the packet loss response packet to the sending device.

For example, the switch may generate the packet loss response packet by using an error feedback engine (error feedback engine, EFE), and send the packet loss response packet to the sending device.

S205: The sending device determines a packet loss handling policy for the data packet based on the received packet loss response packet.

The sending device may determine, based on the packet identification information of the data packet carried in the packet loss response packet, which data packet is discarded.

The sending device determines the packet loss handling policy for the data packet based on the packet loss information carried in the packet loss response packet. For example, if the content of the field corresponding to the RSP Status in the packet loss response packet is 3'b001, it indicates that the packet loss information of the data packet is the packet loss due to buffer overflow, and a corresponding packet loss handling policy is determined as: reducing a speed of sending the packet to the switch, and resending the data packet. The packet loss information is the packet loss due to buffer overflow, which indicates that the buffer unit configured to store the data packet in the switch has no remaining storage space, and it indicates that the switch forwards the data packet at a low speed. The sending device may reduce the speed of sending the packet by using a congestion control module, and resend the data packet, to avoid congestion, and ensure that the data packet is successfully sent to the receiving device.

If the content of the field corresponding to the RSP Status in the packet loss response packet is 3'b010, it indicates that the packet loss information of the data packet is the packet loss due to link damage, and a corresponding packet loss handling policy is determined as: stopping sending the packet to the switch, modifying a route forwarding policy of the packet, and resending the data packet according to a modified route forwarding policy. The packet loss information is the packet loss due to link damage, which indicates that the communication link between the switch and the receiving device is damaged, and the packet cannot be sent to the receiving device via the switch. In this case, the sending device stops sending the packet to a port corresponding to the switch, and modifies the route forwarding policy by using management software. For example, a route forwarding path may be modified by using the management software, and the packet may be sent to the receiving device through another forwarding path, that is, the switch may be changed, and the data packet may be sent to the receiving device via another switch. After modification of the route forwarding policy is completed, the modified route forwarding policy is used to resend the data packet through a new forwarding path, to ensure that the data packet is successfully sent to the corresponding receiving device.

If the content of the field corresponding to the RSP Status in the packet loss response packet is 3'b011, it indicates that the packet loss information of the data packet is the packet loss due to verification error, and a corresponding packet loss handling policy is determined as: resending the data packet. If the packet loss information is the packet loss due to verification error, it indicates that an error occurs in a transmission or decoding process of the data packet, and the sending device immediately resends the data packet.

If the content of the field corresponding to the RSP Status in the packet loss response packet is 3'b 100, it indicates that the packet loss information of the data packet is the packet loss due to matching failure, and a corresponding packet loss handling policy is determined as: stopping sending the packet to the switch, modifying the route forwarding policy of the packet, and resending the data packet according to the modified route forwarding policy. The packet loss information is the packet loss due to matching failure, which indicates that the switch cannot forward the packet to the receiving device corresponding to the data packet. In this case, the sending device stops sending the packet to the port corresponding to the switch, modifies the route forwarding policy by using the management software, and sends the packet to the receiving device through the another forwarding path. After the modification of the route forwarding policy is completed, the modified route forwarding policy is used to resend the data packet through the new forwarding path, to ensure that the data packet is successfully sent to the corresponding receiving device.

If the content of the field corresponding to the RSP Status in the packet loss response packet is 3'b 101, it indicates that the packet loss information of the data packet is the packet loss due to timeout, a corresponding packet loss handling policy is determined as: reducing the speed of sending the packet to the switch, and resending the data packet. The packet loss information is the packet loss due to timeout, which indicates that the switch forwards the data packet at the low speed. The sending device may reduce the speed of sending the packet by using the congestion control module, and resend the data packet, to avoid the congestion, and ensure that the data packet is successfully sent to the receiving device.

In the foregoing process, the sending device may use the packet loss handling policy in a targeted manner based on the packet loss information carried in the packet loss response packet, to ensure that the data packet is successfully sent to the receiving device.

S206: The sending device resends the data packet to the receiving device according to the determined packet loss handling policy.

In some embodiments, if the route forwarding policy is not modified, the sending device may still forward the data packet to the receiving device via the switch. In some other embodiments, if the route forwarding policy is modified, the sending device may forward the data packet to the receiving device via the another switch instead of the switch.

In some embodiments, the switch may generate a packet loss response packet each time a data packet is discarded, and a format of the packet loss response packet may be the packet format shown in the foregoing description.

In some other embodiments, to reduce signaling overheads and communication resources, the switch may generate one packet loss response packet for a plurality of data packets, that is, send one packet loss response packet to the sending device only when the plurality of data packets are discarded. For example, the switch may send the packet loss response packet to the sending device based on a specified time period. If a plurality of data packets are discarded within a time period, the packet loss response packet includes packet identification information of the plurality of discarded data packets and packet loss information of each data packet. Alternatively, the switch may send the packet loss response packet to the sending device after accumulatively discarding a specified quantity of data packets, where the specified quantity may be 2, 3, or 5. The packet loss response packet includes packet identification information of a plurality of discarded data packets and packet loss information of each data packet. If the packet loss response packet includes the packet identification information of the plurality of data packets and the packet loss information of each data packet, the packet loss response packet may include a plurality of information segments, and each data packet corresponds to one information segment. Each information segment includes packet identification information of a data packet and packet loss information of the data packet, and a packet format of each information segment may be the packet format shown in the foregoing description. The sending device may separately determine a packet loss handling policy for each data packet based on packet identification information and the packet loss information of each data packet.

In some other embodiments, the packet loss response packet may include packet identification information of a plurality of data packets and packet loss information corresponding to at least some of the plurality of data packets.

For example, the switch may feed back each received data packet. For example, it is assumed that the sending device sends five data packets to the switch, the switch discards two of the data packets, and successfully sends the other three data packets to the receiving device. In this case, the packet loss response packet may include packet identification information of the four data packets, where the two data packets have corresponding packet loss information, and the other three data packets have no packet loss information. For the three data packets that are successfully sent, the packet loss response packet may include sending success identifiers of the three data packets. A format of the packet loss response packet may be as follows: The packet loss response packet may include five information segments, where two information segments include the packet identification information of corresponding data packets, sending failure identifiers, and the packet loss information of the data packets, and the other three information segments include the packet identification information and the sending success identifiers of corresponding data packets. For example, "0" may be used in a specified field as the sending success identifier, and "1" may be used as the sending failure identifier. The sending device may separately determine a packet loss handling policy for each data packet based on packet identification information and packet loss information of each data packet in the at least some data packets, and do not perform packet loss handling for the successfully sent data packet.

The following describes effect of the packet loss handling method provided in embodiments of this application by comparing the packet loss handling method with the two conventional technologies.

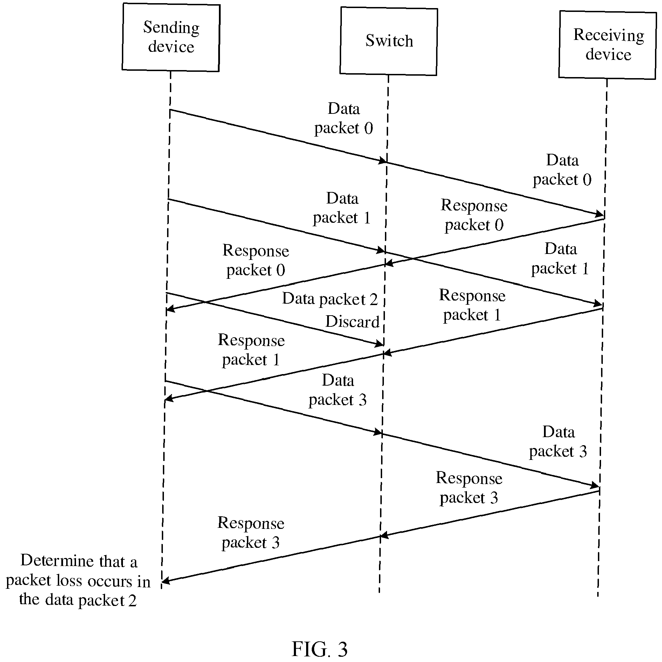

FIG. 3 is a diagram of a packet forwarding process according to the conventional technology. The process is a packet forwarding process in an order-preserving network. A sending device sends four data packets in order: a data packet 0, a data packet 1, a data packet 2, and a data packet 3 respectively. The four data packets are transmitted in order in the network. A receiving device receives the four data packets in order, and returns reply response packets to the sending device in order. If no packet loss occurs in the data packet, the sending device may receive a reply response packet 0, a reply response packet 1, a reply response packet 2, and a reply response packet 3 in order. As shown in FIG. 3, if the data packet 2 is discarded by the switch, and the other three data packets are still transmitted in order, the sending device can determine that a packet loss occurs in the data packet 2 only after receiving the reply response packet 3 corresponding to the data packet 3. It can be learned that the sending device can perform packet loss detection only based on sequence numbers of received previous and next packets. This manner can be used only in the order-preserving network, and cannot be implemented in an out-of-order network. In addition, the sending device cannot determine a reason for the packet loss of the data packet 2. For the lost data packet 2, only retransmission can be performed, and a retransmission failure may still occur, and a packet loss problem may not be resolved.

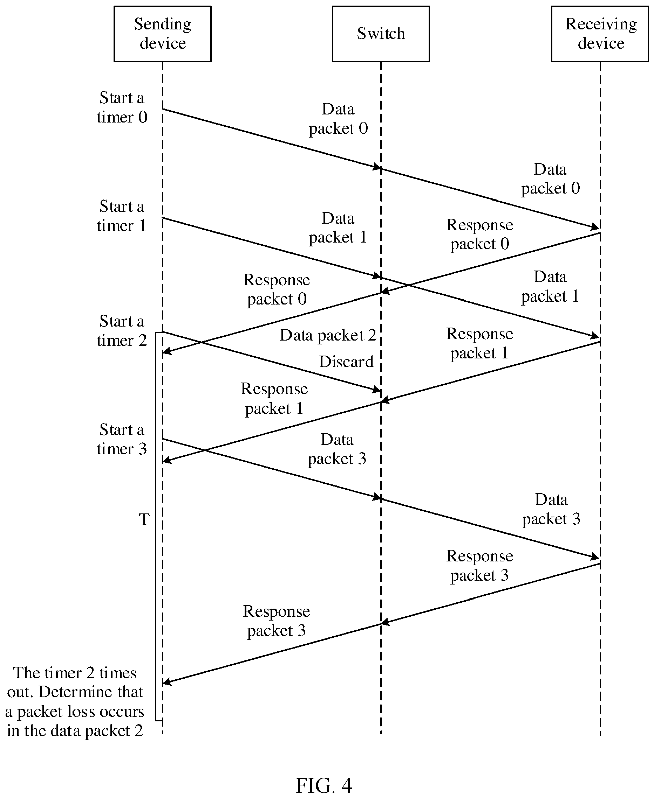

FIG. 4 is a diagram of a packet forwarding process according to the conventional technology. The process is a packet forwarding process in an out-of-order network. As shown in FIG. 4, a sending device sends four data packets in order: a data packet 0, a data packet 1, a data packet 2, and a data packet 3 respectively. Because the four data packets may be transmitted out of order, the sending device cannot perform packet loss detection based on sequence numbers of received previous and next packets. Therefore, each time a data packet is sent, the sending device starts a timer, and specified duration corresponding to each timer is T. For example, when the data packet 0 is sent, a timer 0 is started. When the timer 0 exceeds the specified duration T, the sending device receives a response packet 0 corresponding to the data packet 0, and can end running of the timer 0 and determine that no packet loss occurs in the data packet 0. When sending the data packet 2, the sending device starts a timer 2. When the timer 2 exceeds the specified duration T, if the sending device still does not receive a response packet 2 corresponding to the data packet 2, the sending device determines that a packet loss occurs in the data packet 2. The sending device performs the packet loss detection based on whether timeout occurs in the timer, and a reason for the packet loss of the data packet 2 cannot be determined either.

In addition, time consumed for performing the packet loss detection in the foregoing two methods is long, and the packet loss cannot be processed in time.

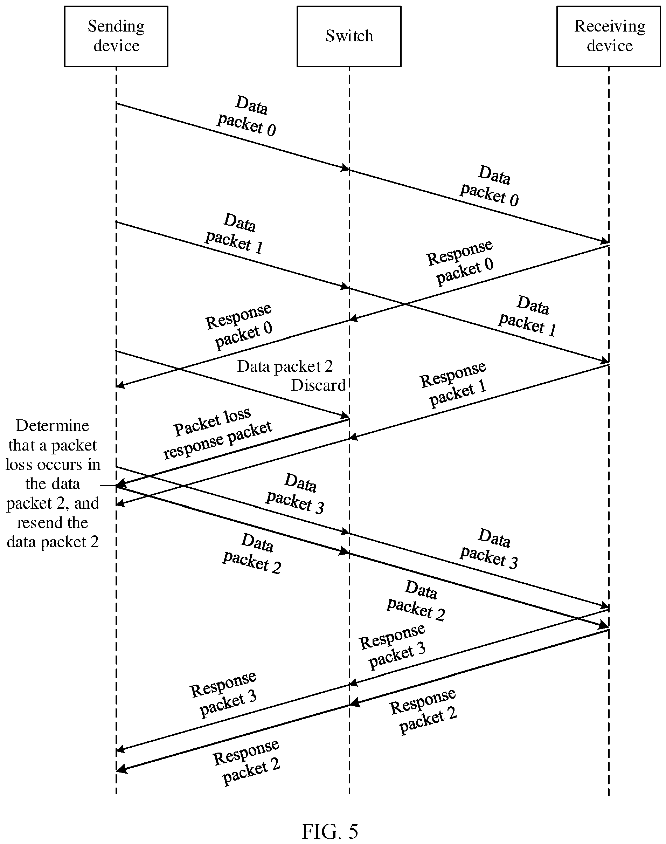

FIG. 5 is a diagram of a packet forwarding process according to an embodiment of this application. A packet loss handling method provided in this embodiment of this application may be used in an order-preserving network, or may be used in an out-of-order network. As shown in FIG. 5, a sending device sends four data packets to a switch in order: a data packet 0, a data packet 1, a data packet 2, and a data packet 3 respectively. The switch is configured to send the received data packet to a receiving device. For example, the switch receives the data packet 0, performs verification on the data packet 0, and forwards the data packet 0 to the receiving device after the verification succeeds. The receiving device processes the received data packet 0, and generates a response packet 0. The receiving device sends the response packet 0 corresponding to the data packet 0 to the switch. After receiving the response packet 0, the switch forwards the response packet 0 to the sending device. In a process of in which the switch forwards the data packet, if an exception occurs and the data packet cannot be forwarded to the receiving device, the switch discards the data packet, and returns a packet loss response packet to the sending device. For example, it is assumed that in a process in which the switch forwards the data packet 2, the verification on the data packet 2 fails, and the switch determines that packet loss information of the data packet 2 is a packet loss due to a verification error. The switch returns the packet loss response packet of the data packet 2 to the sending device, where the packet loss response packet carries the packet loss information of the data packet 2. After receiving the packet loss response packet of the data packet 2, the sending device may determine a corresponding packet loss handling policy based on the packet loss information carried in the packet loss response packet, for example, determine, based on the packet loss information "the packet loss due to verification error" of the data packet 2, that a corresponding packet loss handling policy is: resending the data packet 2.

It can be learned that, compared with the conventional technologies shown in FIG. 3 and FIG. 4, according to the packet loss handling method provided in this embodiment of this application, the sending device is actively notified that a packet loss occurs in the data packet. In this case, the sending device does not need to wait for a long time. Therefore, detection duration of the sending device for the packet loss can be reduced, data transmission efficiency in a service execution process can be improved, and a service execution rate can be improved. In addition, this helps the sending device make response and handle the packet loss in time and reduce network congestion and breakdown caused by delayed packet loss handling. Further, the switch sends the packet loss response packet to the sending device, and actively notifies the sending device that the packet loss occurs in the data packet, so that the sending device does not need to start a timer for each data packet, thereby reducing resource overheads.

In addition, the packet loss response packet returned by the switch to the sending device carries the packet loss information of the data packet, so that the sending device can determine the packet loss handling policy in a targeted manner based on the packet loss information of the data packet instead of performing handling only by resending the data packet for all packet losses. For example, if the packet loss information corresponding to the data packet 2 is a packet loss due to buffer overflow, the sending device may reduce a speed of sending the packet to the switch, and resend the data packet 2, to reduce retransmission failures and improve a retransmission success rate. It can be learned that the sending device determines the packet loss handling policy based on the packet loss information of the data packet, so that the packet loss of the data packet can be processed effectively, and a transmission success rate of the data packet can be improved.

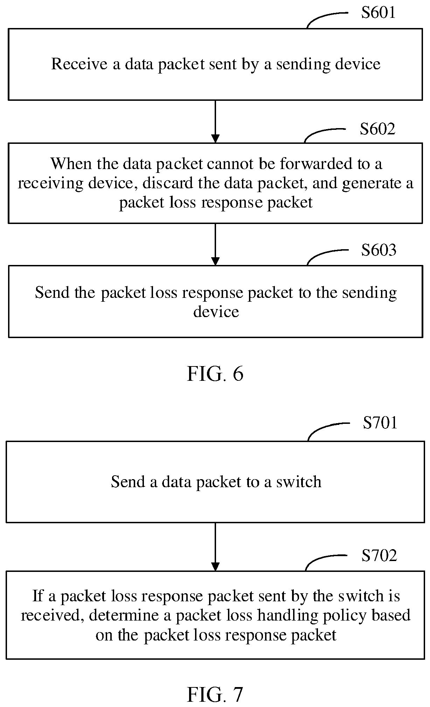

In the foregoing embodiment, the packet loss handling method performed by the switch, as shown in FIG. 6, may include the following steps.

S601: Receive a data packet sent by a sending device;

S602: When the data packet cannot be forwarded to a receiving device, discard the data packet, and generate a packet loss response packet; and

S603: Send the packet loss response packet to the sending device.

If any one of the following packet loss conditions is satisfied, the switch cannot forward the data packet to the receiving device: Verification on the data packet fails, a buffer unit configured to store the data packet has no remaining storage space, route matching for the data packet fails, a communication link between the switch and the receiving device is damaged, or the data packet is not sent within specified duration.

The switch discards the data packet, and determines packet loss information of the data packet based on a packet loss condition corresponding to the data packet, and the packet loss information is any one of the following: a packet loss due to a verification error, a packet loss due to buffer overflow, a packet loss due to a matching failure, a packet loss due to link damage, or a packet loss due to timeout. The switch generates the packet loss response packet based on the packet loss information of the data packet, and returns the packet loss response packet of the data packet to the sending device. The packet loss response packet may further include packet identification information of the data packet, so that the sending device determines a packet loss handling policy for the data packet based on the packet loss response packet.

In a possible implementation, the switch may generate one packet loss response packet for one data packet, where the packet loss response packet includes only packet identification information of one discarded data packet and packet loss information of the data packet. In another possible implementation, to reduce signaling overheads, the switch may generate one packet loss response packet for a plurality of data packets, where the packet loss response packet includes packet identification information of a plurality of discarded data packets and packet loss information of each data packet.

In the foregoing embodiment, the packet loss handling method performed by the sending device, as shown in FIG. 7, may include the following steps.

S701: Send a data packet to a switch; and

S702: If a packet loss response packet sent by the switch is received, determine a packet loss handling policy based on the packet loss response packet.

The packet loss response packet carries packet identification information of the data packet, and may further carry packet loss information of the data packet, and the packet loss information is any one of the following: a packet loss due to a verification error, a packet loss due to buffer overflow, a packet loss due to a matching failure, a packet loss due to link damage, or a packet loss due to timeout. The sending device may determine the packet loss handling policy for the data packet based on the packet loss information of the data packet. For example, if the packet loss information is the packet loss due to verification error, a corresponding packet loss handling policy is determined as: resending the data packet; if the packet loss information is the packet loss due to buffer overflow or the packet loss due to timeout, a corresponding packet loss handling policy is determined as: reducing a speed of sending the packet to the switch, and resending the data packet; or if the packet loss information is the packet loss due to matching failure or the packet loss due to link damage, a corresponding packet loss handling policy is determined as: stopping sending the packet to the switch, modifying a route forwarding policy of the packet, and resending the data packet according to a modified route forwarding policy.

In a possible implementation, the packet loss response packet includes only packet identification information of one discarded data packet and packet loss information of the data packet. In another possible implementation, the packet loss response packet includes packet identification information of a plurality of discarded data packets and packet loss information of each data packet. If the packet loss response packet includes only packet identification information of one data packet and packet loss information of the data packet, the sending device may determine a packet loss handling policy for the data packet according to the foregoing method. If the packet loss response packet includes packet identification information of a plurality of data packets and packet loss information of each data packet, the sending device may separately determine a packet loss handling policy for each data packet based on packet identification information and the packet loss information of each data packet.

Based on a same inventive concept as the foregoing method embodiments, an embodiment of this application further provides a packet loss handling apparatus. The packet loss handling apparatus may be used in a switch, for example, the switch 200 shown in FIG. 1. The packet loss handling apparatus may be configured to implement the functions performed by the switch in the packet loss handling method embodiments, and therefore can implement beneficial effect of the foregoing packet loss handling method embodiments.

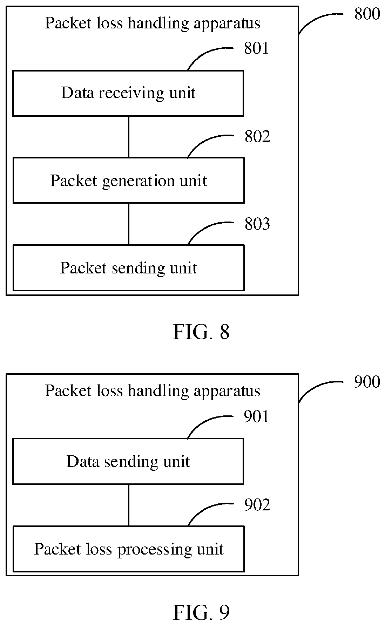

In some embodiments, as shown in FIG. 8, a packet loss handling apparatus 800 provided in this embodiment of this application may include a data receiving unit 801, a packet generation unit 802, and a packet sending unit 803. The packet loss handling apparatus 800 is configured to implement the functions in the method embodiment shown in FIG. 6. When the packet loss handling apparatus 800 is configured to implement the functions in the method embodiment shown in FIG. 6, the data receiving unit 801 may be configured to perform S601, the packet generation unit 802 may be configured to perform S602, and the packet sending unit 803 may be configured to perform S603. For example, the data receiving unit 801 is configured to receive a data packet sent by a sending device; the packet generation unit 802 is configured to: when the data packet cannot be forwarded to a receiving device, discard the data packet, and generate a packet loss response packet; and the packet sending unit 803 is configured to send the packet loss response packet to the sending device.

In a possible implementation, the packet generation unit 802 is further configured to: when any one of the following packet loss conditions is satisfied, determine that the data packet cannot be forwarded to the receiving device: Verification on the data packet fails, a buffer unit configured to store the data packet has no remaining storage space, route matching for the data packet fails, a communication link between the switch and the receiving device is damaged, or the data packet is not sent within specified duration.

In a possible implementation, the packet loss response packet includes packet loss information determined based on a packet loss condition corresponding to the data packet, so that the sending device determines a packet loss handling policy for the data packet based on the packet loss information, and the packet loss information is any one of the following: a packet loss due to a verification error, a packet loss due to buffer overflow, a packet loss due to a matching failure, a packet loss due to link damage, or a packet loss due to timeout.

In a possible implementation, the packet loss response packet includes packet identification information of a plurality of data packets and packet loss information of each data packet.

Based on a same inventive concept as the foregoing method embodiments, an embodiment of this application further provides a packet loss handling apparatus. The packet loss handling apparatus may be used in a sending device, and the sending device may be any one of the first device 101, the second device 102, and the third device 103 shown in FIG. 1. The packet loss handling apparatus may be configured to implement the functions performed by the sending device in the packet loss handling method embodiments, and therefore can implement the beneficial effect of the foregoing packet loss handling method embodiments.

In some embodiments, as shown in FIG. 9, a packet loss handling apparatus 900 provided in this embodiment of this application may include a data sending unit 901 and a packet loss processing unit 902. The packet loss handling apparatus 900 is configured to implement the functions in the method embodiment shown in FIG. 7. When the packet loss handling apparatus 900 is configured to implement the functions in the method embodiment shown in FIG. 7, the data sending unit 901 may be configured to perform S701, and the packet loss processing unit 902 may be configured to perform S702. For example, the data sending unit 901 is configured to send a data packet to a switch; and the packet loss processing unit 902 is configured to: if a packet loss response packet sent by the switch is received, determine a packet loss handling policy based on the packet loss response packet.

In a possible implementation, the packet loss response packet may include packet identification information of the data packet, the packet loss response packet may further carry packet loss information of the data packet, and the packet loss information is any one of the following: a packet loss due to a verification error, a packet loss due to buffer overflow, a packet loss due to a matching failure, a packet loss due to link damage, or a packet loss due to timeout. The packet loss processing unit 902 is specifically configured to determine the packet loss handling policy for the data packet based on the packet loss information of the data packet. For example, if the packet loss information is the packet loss due to verification error, the packet loss handling policy is determined as: resending the data packet; if the packet loss information is the packet loss due to buffer overflow or the packet loss due to timeout, the packet loss handling policy is determined as: reducing a speed of sending the packet to the switch, and resending the data packet; or if the packet loss information is the packet loss due to matching failure or the packet loss due to link damage, the packet loss handling policy is determined as: stopping sending the packet to the switch, modifying a route forwarding policy of the packet, and resending the data packet according to a modified route forwarding policy.

In a possible implementation, the packet loss response packet includes packet identification information of a plurality of data packets and packet loss information of each data packet, and the packet loss processing unit 902 is specifically configured to: separately determine a packet loss handling policy for each data packet based on packet identification information and the packet loss information of each data packet.

Based on a same inventive concept as the foregoing method embodiments, an embodiment of this application further provides a switch. The switch may be configured to implement the functions in the method embodiment shown in FIG. 6, and therefore can implement the beneficial effect of the foregoing method embodiments.

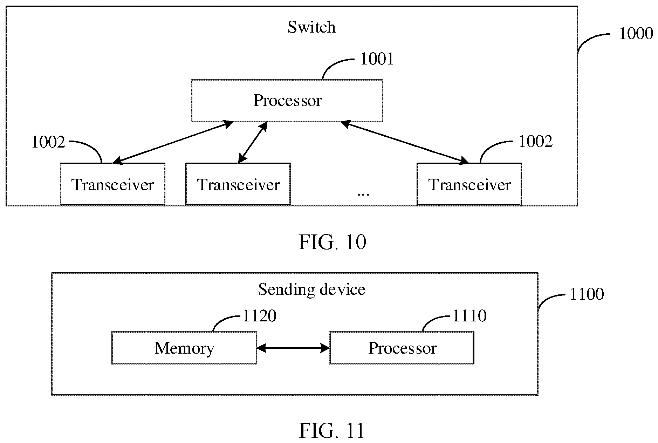

In some embodiments, a structure of a switch 1000 may be shown in FIG. 10, and includes a processor 1001 and one or more transceivers 1002 connected to the processor 1001. The processor 1001 and the transceiver 1002 may be connected to each other through a bus. The processor 1001 may be a general-purpose processor, for example, a microprocessor, or another conventional processor. The bus may be a peripheral component interconnect (peripheral component interconnect, PCI) bus or an extended industry standard architecture (extended industry standard architecture, EISA) bus, or the like. The bus may be classified into an address bus, a data bus, a control bus, and the like.

The transceiver 1002 is configured to send or receive a data packet under control of the processor 1001. The transceiver 1002 may be understood as a data transmission interface. The switch 1000 may include a plurality of transceivers 1002, and different transceivers may be connected to different sending devices or receiving devices. For example, the switch 1000 may receive, by using one transceiver 1002, a data packet sent by a sending device, and send, by using another transceiver, the data packet to a corresponding receiving device.

In an embodiment, the processor 1001 in the switch 1000 is configured to run computer instructions or a program, to perform the functions in the method embodiment shown in FIG. 6. When the switch 1000 is configured to implement the method shown in FIG. 6, the processor 1001 is configured to: perform the functions of the data receiving unit 801, the packet generation unit 802, and the packet sending unit 803, receive, by using the transceiver 1002, a data packet sent by a sending device, and when the data packet cannot be forwarded to the receiving device, discard the data packet, generate a packet loss response packet, and return the packet loss response packet of the data packet to the sending device by using the transceiver 1002.

In an embodiment, the switch 1000 may further include a memory. The memory is configured to store the instructions or the program executed by the processor 1001, store input data required by the processor 1001 to run the instructions or the program, or store data generated after the processor 1001 runs the instructions or the program. The processor 1001 may include one or more processing units, and different processing units may be independent components, or may be integrated into one or more processors. The processor 1001 may further include a controller. The controller may generate an operation control signal based on an instruction operation code and a time sequence signal to complete control of instruction fetching and instruction execution.

In another embodiment, the switch 1000 may not include a memory inside, and when a memory is required, the memory may be connected in an external manner.

It may be understood that the structure shown in this embodiment of this application does not constitute any specific limitation on the switch. In some other embodiments of this application, the switch may include more or fewer components than those shown in the figure, or may combine some components, or may split some components, or may have different component arrangements. The components shown in the figure may be implemented by hardware, software, or a combination of software and hardware.

Based on a same inventive concept as the foregoing method embodiments, an embodiment of this application further provides a sending device. The sending device may be any one of the first device 101, the second device 102, and the third device 103 shown in FIG. 1. The sending device may be configured to implement the functions in the foregoing method embodiments, and therefore can implement the beneficial effect of the foregoing method embodiments.

In some embodiments, a structure of a sending device 1100 may be shown in FIG. 11, and includes a processor 1110 and a memory 1120 connected to the processor 1110.

Optionally, the processor 1110 and the memory 1120 may be connected to each other through a bus. The processor 1110 may be a general-purpose processor, for example, a microprocessor, or another conventional processor. The bus may be a PCI bus, an EISA bus, or the like.

The memory 1120 is configured to store instructions or a program executed by the processor 1110, store input data required by the processor 1110 to run the instructions or the program, or store data generated after the processor 1110 runs the instructions or the program. The processor 1110 may include one or more processing units, and different processing units may be independent components, or may be integrated into one or more processors.

Optionally, the sending device 1100 may further include a transceiver, and the transceiver is configured to receive or send a packet.

In an embodiment, the processor 1110 in the sending device 1100 may run the instructions or the program stored in the memory 1120, to perform the functions in the method embodiment shown in FIG. 7. When the sending device 1100 is configured to implement the method shown in FIG. 7, the processor 1110 is configured to: perform the functions of the data sending unit 901 and the packet loss processing unit 902, send a data packet to a switch by using the transceiver, and if a packet loss response packet sent by the switch is received, determine a packet loss handling policy based on the packet loss response packet.

It may be understood that, the structure shown in this embodiment of this application does not constitute a specific limitation on the sending device. In some other embodiments of this application, the sending device may include more or fewer components than those shown in the figure, or may combine some components, or may split some components, or may have different component arrangements. The components shown in the figure may be implemented by hardware, software, or a combination of software and hardware.

Based on a same inventive concept as the foregoing method embodiments, an embodiment of this application further provides a data transmission system. The data transmission system may be configured to implement the functions in the foregoing method embodiments, and therefore can implement the beneficial effect of the foregoing method embodiments.

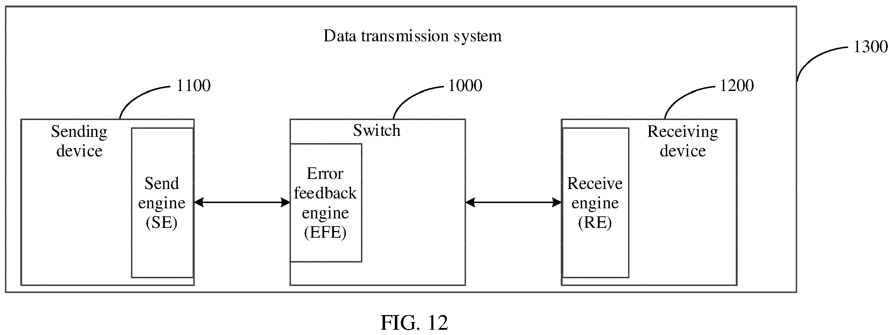

In some embodiments, a structure of a data transmission system 1300 may be shown in FIG. 12, and includes a sending device 1100, a switch 1000, and a receiving device 1200. The switch 1000 may be connected to the sending device 1100 and the receiving device 1200 in a wired or wireless manner, and perform data transmission by using a communication protocol. The switch 1000 is configured to forward a data packet from the sending device 1100 to the receiving device 1200. For example, the sending device 1100 may send the data packet to the switch 1000 by using a send engine, the switch 1000 forwards the data packet to the receiving device, and the receiving device may receive, by using a receive engine, the data packet sent by the switch. In a process of forwarding the data packet, if the switch 1000 determines that the data packet cannot be forwarded to the receiving device 1200, the switch 1000 discards the data packet, and returns a packet loss response packet of the data packet to the sending device 1100 by using an error feedback engine to actively notify the sending device 1100 that a packet loss occurs in the data packet. The sending device 1100 determines a packet loss handling policy for the data packet based on the received packet loss response packet. A structure of the switch 1000 may be shown in FIG. 10, and a structure of the sending device 1100 may be shown in FIG. 11.

For example, the data transmission system 1300 may be the computer system shown in FIG. 1, or may be another communication system. For example, in the computer system, each service node or compute node may serve as a sending device when sending a data packet, and may serve as a receiving device when receiving a data packet.

The method steps in embodiments of this application may be implemented by hardware, or may be implemented by a processor executing a computer program or instructions. The computer program or the instructions may constitute a computer program product. An embodiment of this application further provides a computer program product, including computer-executable instructions. In an embodiment, the computer-executable instructions are used to enable a computer to perform the functions in the method embodiment shown in FIG. 6. In another embodiment, the computer-executable instructions are used to enable a computer to perform the functions in the method embodiment shown in FIG. 7.

The computer-executable instructions may be stored in a computer-readable storage medium. An embodiment of this application further provides a computer-readable storage medium. The computer-readable storage medium stores executable instructions. In an embodiment, the computer-executable instructions are used to enable a computer to perform the functions in the method embodiment shown in FIG. 6. In another embodiment, the computer-executable instructions are used to enable a computer to perform the functions in the method embodiment shown in FIG. 7.

The computer-readable storage medium provided in embodiments of this application may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically ePROM, EEPROM), a register, a hard disk, a removable hard disk, a CD-ROM, or any other form of computer-readable storage medium well-known in the art.

The computer-executable instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape; may be an optical medium, for example, a digital video disc (digital video disc, DVD); or may be a semiconductor medium, for example, a solid-state drive.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. In addition, terms "include", "have", and any variant thereof are intended to cover non-exclusive inclusion. For example, a method, system, product, or device that includes a series of steps or units is not necessarily limited to those steps or units expressly listed, but may include other steps or units not expressly listed or inherent to such a process, method, product, or device.

Although this application is described with reference to specific features and embodiments thereof, it is clear that various modifications and combinations may be made to this application without departing from the spirit and scope of this application. Correspondingly, this specification and the accompanying drawings are merely example descriptions of solutions defined by the appended claims, and are considered as any or all of modifications, variations, combinations, or equivalents that cover the scope of this application.

It is clear that a person skilled in the art can make various modifications and variations to this application without departing from the scope of this application. This application is intended to cover these modifications and variations provided that they fall within the scope of protection defined by the following claims and their equivalent technologies.

## Claims

1. A packet loss handling method, applied in a switch, wherein the switch is configured to forward a packet to a receiving device, and the method comprises:
receiving the data packet sent by a sending device;
when the data packet cannot be forwarded to the receiving device, discarding the data packet, and generating a packet loss response packet; and
sending the packet loss response packet to the sending device.

2. The method according to claim 1, wherein that the data packet cannot be forwarded to the receiving device comprises:
verification on the data packet fails;
a buffer unit configured to store the data packet has no remaining storage space;
route matching for the data packet fails;
a communication link between the switch and the receiving device is damaged; or
the switch fails to send the data packet within specified duration.

3. The method according to claim 1 or 2, wherein the packet loss response packet comprises packet loss information, the packet loss information indicates a reason for discarding the data packet, and the packet loss information comprises any one of the following: a packet loss due to a verification error, a packet loss due to buffer overflow, a packet loss due to a matching failure, a packet loss due to link damage, or a packet loss due to timeout.

4. The method according to any one of claims 1 to 3, wherein the packet loss response packet comprises packet identification information of a plurality of data packets and packet loss information corresponding to each of the plurality of data packets.

5. The method according to any one of claims 1 to 3, wherein the packet loss response packet comprises packet identification information of a plurality of data packets and packet loss information corresponding to at least some of the plurality of data packets.

6. A packetloss handling method, applied in a sending device, wherein the method comprises:
sending a data packet to a switch, wherein the switch is configured to forward the packet to a receiving device; and
if a packet loss response packet sent by the switch is received, determining a packet loss handling policy based on packet loss information carried in the packet loss response packet.

7. The method according to claim 6, wherein the packet loss information indicates a reason for discarding the data packet, and the packet loss information comprises any one of the following:
a packet loss due to a verification error, a packet loss due to buffer overflow, a packet loss due to a matching failure, a packet loss due to link damage, or a packet loss due to timeout.

8. The method according to claim 7, wherein the determining a packet loss handling policy based on packet loss information carried in the packet loss response packet comprises:
if the packet loss information is the packet loss due to verification error, resending the data packet;
if the packet loss information is the packet loss due to buffer overflow or the packet loss due to timeout, reducing a speed of sending the packet to the switch, and resending the data packet; or
if the packet loss information is the packet loss due to matching failure or the packet loss due to link damage, stopping sending the packet to the switch, modifying a route forwarding policy of the packet, and resending the data packet according to a modified route forwarding policy.

9. The method according to claim 6, wherein the packet loss response packet comprises packet identification information of a plurality of data packets and packet loss information corresponding to each of the plurality of data packets, and the determining a packet loss handling policy based on packet loss information carried in the packet loss response packet comprises:
separately determining a packet loss handling policy for each data packet based on packet identification information and the packet loss information of each data packet.

10. The method according to claim 6, wherein the packet loss response packet comprises packet identification information of a plurality of data packets and packet loss information corresponding to at least some of the plurality of data packets, and the determining a packet loss handling policy based on packet loss information carried in the packet loss response packet comprises:
separately determining a packet loss handling policy for each data packet based on packet identification information and packet loss information of each data packet in the at least some data packets.

11. A packet loss handling apparatus, used in a switch, wherein the switch is configured to forward a packet to a receiving device, and the apparatus comprises:
a data receiving unit, configured to receive the data packet sent by a sending device;
a packet generation unit, configured to: when the data packet cannot be forwarded to the receiving device, discard the data packet, and generate a packet loss response packet; and
a packet sending unit, configured to send the packet loss response packet to the sending device.

12. The apparatus according to claim 11, wherein that the data packet cannot be forwarded to the receiving device comprises:
verification on the data packet fails;
a buffer unit configured to store the data packet has no remaining storage space;
route matching for the data packet fails;
a communication link between the switch and the receiving device is damaged; or
the switch fails to send the data packet within specified duration.

13. The apparatus according to claim 11 or 12, wherein the packet loss response packet comprises packet loss information, the packet loss information indicates a reason for discarding the data packet, and the packet loss information is any one of the following: a packet loss due to a verification error, a packet loss due to buffer overflow, a packet loss due to a matching failure, a packet loss due to link damage, or a packet loss due to timeout.

14. The apparatus according to any one of claims 11 to 13, wherein the packet loss response packet comprises packet identification information of a plurality of data packets and packet loss information corresponding to each of the plurality of data packets.

15. The apparatus according to any one of claims 11 to 13, wherein the packet loss response packet comprises packet identification information of a plurality of data packets and packet loss information corresponding to at least some of the plurality of data packets.

16. A packet loss handling apparatus, used in a sending device, wherein the apparatus comprises:
a data sending unit, configured to send a data packet to a switch, wherein the switch is configured to forward the packet to a receiving device; and
a packet loss processing unit, configured to: if a packet loss response packet sent by the switch is received, determine a packet loss handling policy based on packet loss information carried in the packet loss response packet.

17. The apparatus according to claim 16, wherein the packet loss information indicates a reason for discarding the data packet, and the packet loss information comprises any one of the following: a packet loss due to a verification error, a packet loss due to buffer overflow, a packet loss due to a matching failure, a packet loss due to link damage, or a packet loss due to timeout.

18. The apparatus according to claim 17, wherein the packet loss processing unit is specifically configured to:
if the packet loss information is the packet loss due to verification error, resend the data packet;
if the packet loss information is the packet loss due to buffer overflow or the packet loss due to timeout, reduce a speed of sending the packet to the switch, and resend the data packet; or
if the packet loss information is the packet loss due to matching failure or the packet loss due to link damage, stop sending the packet to the switch, modify a route forwarding policy of the packet, and resend the data packet according to a modified route forwarding policy.

19. The apparatus according to claim 16, wherein the packet loss response packet comprises packet identification information of a plurality of data packets and packet loss information corresponding to each of the plurality of data packets, and the packet loss processing unit is specifically configured to:
separately determine a packet loss handling policy for each data packet based on packet identification information and the packet loss information of each data packet.

20. The apparatus according to claim 16, wherein the packet loss response packet comprises packet identification information of a plurality of data packets and packet loss information corresponding to at least some of the plurality of data packets, and the packet loss processing unit is specifically configured to:
separately determine a packet loss handling policy for each data packet based on packet identification information and packet loss information of each data packet in the at least some data packets.

21. A switch, comprising a transceiver and a processor, wherein the transceiver is configured to send or receive a data packet under control of the processor, and the processor is configured to execute a computer program to implement the method according to any one of claims 1 to 5.

22. A sending device, comprising a memory and a processor, wherein the memory stores a computer program that can be run on the processor, and when the computer program is executed by the processor, the processor is enabled to implement the method according to any one of claims 6 to 10.

23. A data transmission system, comprising a sending device, a switch, and a receiving device, wherein the switch is configured to forward, by the sending device, a packet to the receiving device, the switch is the switch according to claim 21, and the sending device is the sending device according to claim 22.

24. A computer-readable storage medium, storing computer-executable instructions, wherein the computer-executable instructions are used to enable a computer to perform the method according to any one of claims 1 to 5, or perform the method according to any one of claims 6 to 10.

25. A computer program product, comprising computer-executable instructions, wherein the computer-executable instructions are used to enable a computer to perform the method according to any one of claims 1 to 5, or perform the method according to any one of claims 6 to 10.
